Europäisches Patentamt

(19) European Patent Office

Office européen des brevets

(11) Publication number: **0 047 351**
**B1**

(12) # EUROPEAN PATENT SPECIFICATION

(45) Date of publication of patent specification: **08.05.85**

(21) Application number: **80303906.4**

(22) Date of filing: **03.11.80**

(51) Int. Cl.⁴: **F 16 L 37/26,** F 16 L 25/00,
F 16 N 21/00

(54) **Fluid couplings.**

(30) Priority: **05.09.80 GB 8028832**

(43) Date of publication of application:
**17.03.82 Bulletin 82/11**

(45) Publication of the grant of the patent:
**08.05.85 Bulletin 85/19**

(84) Designated Contracting States:
**AT BE CH DE FR GB IT LI LU NL SE**

(56) References cited:
**DE-A-2 145 739**
**DE-A-2 651 524**
**GB-A-1 097 592**
**GB-A-1 563 257**
**GB-A-2 041 132**
**US-A-1 671 091**
**US-A-2 057 771**
**US-A-4 082 324**
**US-A-4 103 712**

(73) Proprietor: **SCOVILL INC**
**500 Chase Parkway**
**Waterbury Connecticut 06708 (US)**

(72) Inventor: **Martin, Keith Sidney**
**1 Hilcote Hollow**
**Stafford (GB)**
Inventor: **Davis, Barrie**
**119 Hatherton Road**
**Cannock Staffordshire (GB)**

(74) Representative: **Gura, Henry Alan et al**
**MEWBURN ELLIS & CO. 2/3 Cursitor Street**
**London EC4A 1BQ (GB)**

## Description

This invention relates to fluid coupling assemblies and to members of such assemblies having interlocking coupling means. It is particularly concerned, although not necessarily so, with assemblies of gaseous, e.g. air, treatment devices such as for the coupling of a filter and/or a pressure regulator and/or a lubricator in a pneumatic pressure line.

It is a desirable feature of such fluid coupling assemblies that one or other of the devices so connected can be inserted and removed without disturbing the pipe line to and from it. There are already known a number of constructions that permit this by the use of interengaging wedge surfaces on the respective members to be coupled together, the surfaces being disposed adjacent respective transverse end faces of the members into which open the internal inlet and outlet conduits of the respective members. By engaging the wedge surfaces through relative movement of the members transverse to these conduits it is possible to bring the openings into registration with each other and the mating end faces come into engagement with an interposed sealing ring so as to seal the conduits from the exterior. The use of a wedge-form interengagement can prevent undue disturbance of the sealing ring because the ring need only be engaged after some of the movement transverse to the conduits has been completed, and the wedge surfaces can also produce a frictional retaining effect without relying on very close dimensional tolerances.

Arrangements of interengaging wedge surfaces have been proposed in which simply the friction forces of the wedge engagement is intended to retain the members together (as in GB patent 1 097 592) and also in which a further locking member secures the members in engagement (as in US patent 2 057 771).

Generally speaking, it may be preferred not to rely solely upon wedge friction to hold the members in registration against vibration or other disturbing forces as very frequent inspection then becomes necessary if the risk of leakage is to be avoided. Whether or not a further locking member is provided, if the wedge surfaces are themselves arranged to provide a substantial friction force holding the members together it will be correspondingly difficult to dismantle the members from each other, particularly if they have become bedded into each other over a long period of time. It may then be necessary to use a percussive tool, with the risk of damage to the members and possibly also of disturbance to the seals elsewhere in the fluid line. This is also a potential danger when using a locking arrangement such as is shown in US patent 2 057 771, where the locking member is secured percussively.

The wedge angle is a factor influencing the frictional locking effect, and other things being equal the smaller the angle the greater will be the retaining force. In order to avoid difficulty when separating two interengaged members therefore, a relatively large wedge angle is preferably chosen, but this results in the disadvantage that the construction then becomes more bulky.

This is exemplified in GB—A—1 563 257 where a pair of members have wedge engagements of such a large angle that there is no frictional retaining effect, while the axial length occupied by the connecting means between two members constitutes a substantial part of the overall length of an assembly. The members are secured together by a connector pin which extends through opposite side flanges on one member below the conduit and an interposed socket of the other member. The socket has a cam surface that is engaged as the pin is inserted with the result that the mating faces of the members are pushed against each other, but in the absence of the pin the members are no longer tightly interengaged and their mating faces are not retained in sealing engagement, and strain or wear between the pin and socket will similarly prevent sealing. Being a separate item, the pin can easily be lost, and more importantly a smaller diameter pin might be substituted which would not push the mating faces into full sealing engagement.

US—A—4 082 324 proposes a rather different form of connection for hydraulic manifold blocks using wedge brackets. These blocks have slots of tapering width in their side faces adjacent abutting mating faces. Two separate clamping brackets span the jointing face between two manifold blocks and each is screwed to both blocks to hold the blocks together. The clamping brackets have wedge-like tongues that enter the slots and draw the mating faces of the two blocks together.

According to one aspect of the present invention there is provided a fluid coupling assembly comprising at least two members adapted to be coupled together with internal fluid conduits opening into opposed end faces of the respective members to be placed in communication with each other and sealing means between said end faces sealing said fluid conduits from the exterior, respective wedge surfaces on said two members interengaging the members by relative movement transversely to said fluid conduits, said wedge surfaces being slidably interengageable to draw said faces together with the sealing means engaged operatively between them when said conduits are in registration, a securing screw held captive on a projection extending from an end face of one of said two members being engageable in a threaded aperture in the other of said two members whereby rotation in one direction causes relative sliding of the wedge surfaces drawing the openings of the conduits into alignment with each other, and rotation in the opposite direction urges the conduits out of alignment so as to at least partly relieve the forces of engagement.

By providing means which can be utilised to cause the members to be positively released from

3       0 047 351       4

alignment with each other it is possible to reduce the wedge angle without danger of making it impossible to dismantle the members. The included angle of the wedge surfaces can thus preferably be kept to less than 10°, and may advantageously be made not more than 5°.

With such small wedge angles, the space occupied in a direction parallel to said fluid conduits can be correspondingly reduced. An assembly according to the invention may include at least one member which has wedge surfaces at opposite end faces to form couplings with respective further members, and in that case to take advantage of the relatively small dimensions permitted by the small wedge angles the locations of the rotary members are offset laterally to opposite sides of said conduit openings at said opposite end faces.

When a plurality of devices are to be coupled with the pipe line, between the or each successive pair of devices there is provided an intermediate connector having a through-bore opening into opposite end faces, at each of which are provided wedge surfaces in the same manner as an end connector, and a securing screw is provided between each of said pair of devices and the intermediate connector.

The invention will be described in more detail by way of example with reference to the accompanying drawings, in which

Fig. 1 is a schematic side view of a filter-regulator-lubricator assembly for a pressure air line incorporating a coupling assembly according to the invention,

Fig. 2 is an exploded perspective view illustrating the coupling arrangement between one of the air treatment devices in Fig. 1 and an adjoining end connector member,

Fig. 3 is an end view of the end coupling member on the side that is hidden in Fig. 2, and

Figs. 4 and 5 are end and plan views of an intermediate connector member of the assembly in Fig. 1.

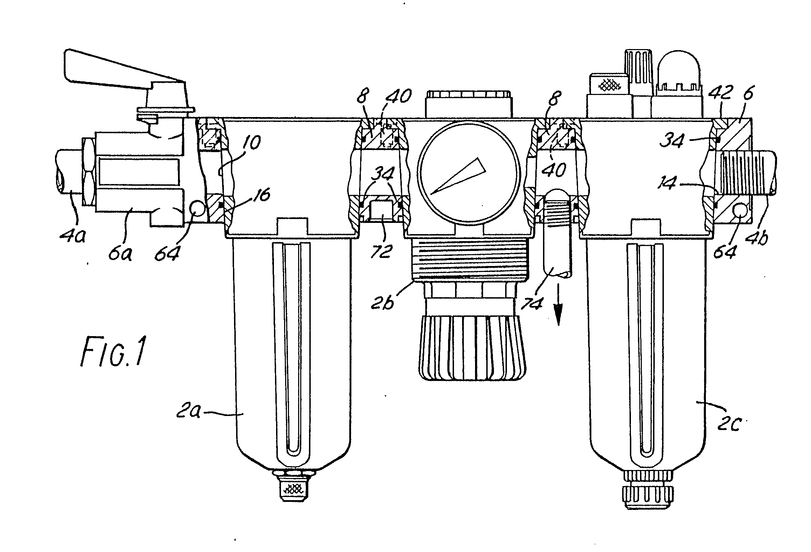

Fig. 1 of the drawings shows the use of the invention in coupling a series of members in the form of air treatment devices 2 into a pressure air line between inlet and outlet pipes 4a, 4b of that line. The devices in this illustrated example are a filter 2a, a pressure regulator 2b and a lubricator 2c, but their internal construction is not shown and this can be of generally known form. The devices are each adapted to be coupled into the pipe line with the aid of end and intermediate connector members 6, 8 respectively for which purpose they are provided with wedge elements on opposed transverse end faces 10 into which open internal conduits 12 of the devices. The opposite transverse end faces 10 of each of the devices are slightly inclined towards each other, as seen from the top of the device, and the internal fluid conduits 12 extend longitudinally of the assembly from the openings disposed centrally in these faces.

The inlet end connector member adjoining the filter 2a optionally includes an integral shut-off cock 6a. Otherwise it has corresponding features to the outlet end connector adjoining the lubricator 2c and will not be described separately. Thus, each end connector member comprises a threaded bore 14 by means of which the connector member can be sealingly screwed onto the inlet or outlet pipe with said bore providing a conduit through the connector member, and on one end face 16 inclined complementarily to the opposed transverse end face 10 of the adjoining air treatment device there are wedge elements that co-operate with the wedge elements of that end face.

Each intermediate connector member has a plain bore 18 to provide a conduit communicating directly between the internal conduits of its adjacent air treatment devices. On both end faces 16, which are complementarily inclined to the adjoining end faces of the devices between which the connector member is sandwiched, there are corresponding wedge elements for co-operation with the wedge elements of those adjacent devices.

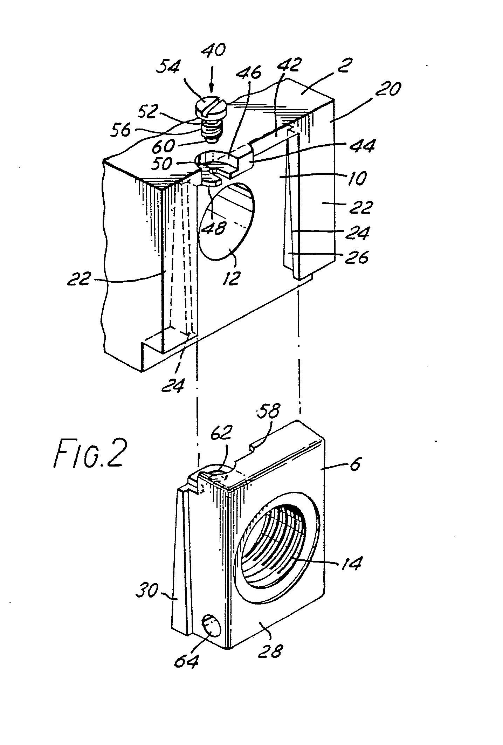

At each transverse end face of an air treatment device, as can be seen more clearly in Fig. 2, there is a projecting rim 20 at the side and top edges of the face. The side portions 22 of the rim are undercut to form on each a face 24 opposed to the adjacent end face 10 and inclined oppositely to that face so as to produce wedge-form recesses 26 at each side of the end face, widening towards their lower ends. The included angle of the wedge surfaces defined by the faces 10, 24 is 4°40', and in this example each end face and its opposed rim faces are equally and oppositely inclined to a plane normal to the conduits, although it is also possible to incline one more than the other.

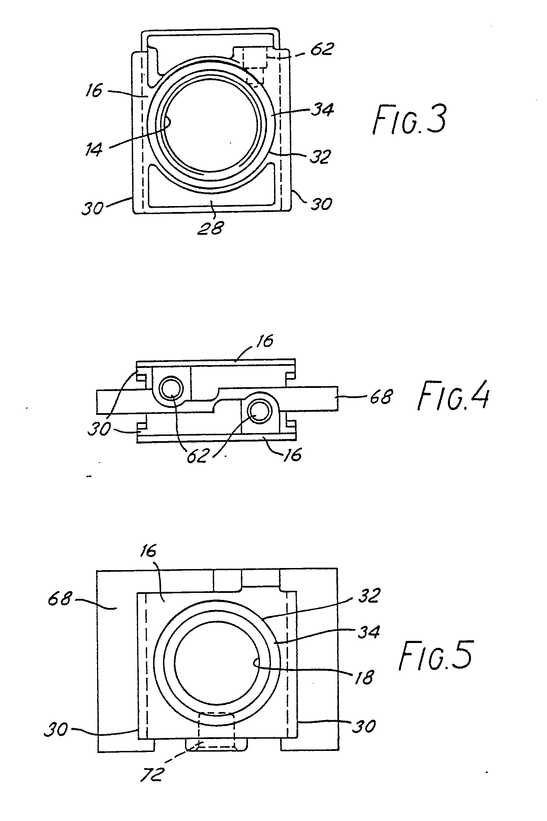

The end connector member shown in Fig. 2 has a main body 28 of a width that fits freely between the side portions of the rim 20 of the adjoining device 2. Its transverse end face 16 is coplanar with shoulders 30 that project from opposite sides of the body in the form of wedge elements with the surfaces 31 and the marginal surfaces of the end face 16 complementary to the wedge surfaces 10, 24 of the recesses 26 at the sides of the end face of the device. In said end face of the connector member, as can be seen in Fig. 3, there is a groove 32 concentric with the threaded bore 14. This houses a resilient O-ring 34 that projects slightly from the plane of the end face 16 so as to bring it against the opposed end face 10 of the treatment device and seal the conduits 12, 14 from the exterior when the device and the end connector member are coupled together by interengagement of the wedge elements 26, 30.

For said interengagement the recesses 26 of the device are first brought over the wedges 30, as shown in Fig. 2. As the device is lowered, the wedges enter the recesses, but there is initially some axial free play between the opposed end faces 10, 16 so that the face of the O-ring 34 protruding from the recess 32 is only brought into sealing engagement with the end face 10 in the final stage of the interengaging movement.

3

The sliding insertion of the device over the wedge elements 30 is stopped before the conduits 12, 14 are fully aligned with each other, and the last part of the interengagement is completed by use of securing means comprising a screw member 40 held captive on the treatment device 2. In the top portion 42 of the device end rim 20 there is an axial projection 44 in which a recess 46 is formed, the bottom wall 48 of the recess having a slot 50 in which a reduced diameter portion 52 of the screw member shank can be received. The screw head 54 above this portion 52 and the screw-threaded portion 56 below it are both of larger diameter than the slot, and after insertion of the screw member the edges of the slot are forced together slightly so that the member is then held captive although it is free to rotate.

As the device 2 is slid onto the wedge elements 30, projection 44 slides into a mating recess 58 in the connector member and a reduced diameter bottom lead portion 60 of the screw member enters a threaded hole 62 in the connector member. The final part of the assembly movement is effected by rotating the screw member clockwise so that its screw-threaded portion 56 engages the threaded hole and applies pressure through the underside of the screwhead onto the treatment device 2 to draw it down into the fully aligned position of the conduits with the connector abutted against the rim top portion 42. The treatment device and the connector member are then locked together by the screw-thread engagement with the wedge elements fully interengaged and the O-ring held slightly compressed against the end face 10.

When the device is to be detached from the connector member the screw member is rotated anti-clockwise. It is still unable to move in its axial direction relative to the device, because now the top of the threaded portion 56 will bear against the underside of the slotted bottom wall 48 of the recess, so that as the screw member is screwed out of the connector member 6 it raises the device from the fully engaged position. In this way, any tendency of the parts to stick together can be readily overcome. Even though the O-ring will still be engaged against the end face 10, once the initial separating movement has been made to the extent that the screw member 40 is freed from the threaded hole 62 in the connector members, the device can be very easily slid from the connector member.

In order to be able to fix the assembled parts securely to an adjacent support (not shown), a cross-bore 64 is provided in each end connector member to receive the shank of an anchoring bolt.

The intermediate connector member 8, as shown in Figs. 4 and 5, has its plain bore 18 forming a conduit opening into oppositely inclined end faces 16, each of which is arranged in the same manner as the inclined end face of the end connector member already described, with wedge elements 30 and a laterally offset screw hole 62 located in a recess 58 in its top face.

Between the opposite end faces the intermediate connector member has a flange 68, the outer side and top surfaces of which are flush with those of the adjoining air treatment devices for appearance sake.

As is apparent from Fig. 4 the lateral offset of the screw holes 62 in the intermediate connector member allows the potential compact nature of the small wedge angles to be utilised, whereas if the screw holes were located centrally in the top face the overall thickness of the intermediate connector member would have to be increased to accommodate them.

Figs. 1 and 5 illustrate an optional blind bore 72 in the bottom face of the intermediate connector member, spaced from the end faces 16, that can be drilled to break through into the central fluid conduit 64 if it is required to provide a T-junction, e.g. for a pressure air take-off 74 (Fig. 1) upstream of the lubricator.

When assembling the parts in place, the air treatment devices can be preassembled as a unit with the intermediate connector members, and in each connection the respective device is located as shown in Fig. 2, with its recesses 26 above the elements 30 of the associated connector end face before the device is lowered, in a direction transverse to the pipe line and the conduits, to bring the opposed end faces together. In the manner already described the final downwards movement of each device locating and securing the parts in their fully registered positions with each other is effected by the screw members 40. The inlet and outlet pipes for the coupling assembly are disposed coaxially the required distance apart and the respective end connector members are screwed onto them with their inclined end faces 16 opposed and inclined upwardly apart. The preassembled unit of devices 2 and intermediate connector members can then be lowered onto the end connector members and secured thereto by the associated screw members 40, as already described.

If one of the treatment devices is to be removed, the two screw members holding it in its connector members are rotated anticlockwise to screw them out of their holes in the connector members and thus raise the device slightly. The movement is sufficient to release the device from fully aligned engagement with its adjoining connecting members and in particular to overcome any tendency to stick in the fully aligned position. Once the screw members are free of their holes in the connector members the released device can be simply slid upwards to remove it.

To replace the device, the procedure is reversed. It may be noted that the device is supported through the wedge elements of its connector members before the screw members come into use, so that there is no need for the user to hold the device while rotating the screw members to secure the device, nor to support the device to prevent it falling when the screw members are being released.

It will be appreciated that it is possible to employ a converse arrangement of wedge surfaces in which the projecting wedge elements are on the devices and the wedge recesses on the connector members. In that case, however, the surfaces preferably taper downwardly in order to provide support for a device independently of the screw members, in the same way as just described for the illustrated construction.

Because the screw members are captive, there are no loose parts that might become lost in use. It may also be noted that it is necessary to screw the screw members into the connector members in order to bring the wedge connections to their final position, so that it can be immediately seen if a screw member is not engaged with its connector member. It is of course alternatively possible to mount the screw members on the connector members to engage tapped holes in the devices.

While the illustrated construction shows an arrangement in which all the wedge surfaces have an identical configuration, i.e. any wedge connection male part can be engaged with any female part, it may be preferred to have different forms of connection that ensure that a replacement air treatment device can only be coupled into an assembly with the air flowing through it in one particular direction. It would nevertheless be preferred in that case to maintain similar wedge angles for all the adjoining end faces, since the inclination at these faces ensures that there is little or no contact with the sealing O-ring over the major part of the coupling and dismantling movements transverse to the conduits and therefore minimises any risk of displacement or damage by rubbing on the O-rings.

**Claims**

1. A fluid coupling assembly comprising at least two members (2, 6, 8) adapted to be coupled together with internal fluid conduits opening into opposed end faces of the respective members to be placed into communication with each other and sealing means (34) between said end faces sealing said fluid conduits from the exterior, respective wedge surfaces (10, 24; 16, 31) on said two members interengaging the members by relative movement transversely to said fluid conduits, said wedge surfaces being slidably interengageable to draw said faces together with the sealing means engaged operatively between them when said conduits are in registration, characterised in that a securing screw (40) held captive on a projection extending from an end face of one of said two members (2, 6, 8) is engageable in a threaded aperture in the other of said two members whereby rotation in one direction causes relative sliding of the wedge surfaces (10, 24 and 16, 31) drawing the openings of the conduits (12, 14, 18) into alignment with each other, and rotation in the opposite direction urges the conduits out of alignment so as to at least partly relieve the forces of engagement on the wedge surfaces (10, 24 and 16, 31).

2. A fluid coupling assembly according to claim 1 wherein said members comprise at least one gas treatment device (2a, 2b, 2c) and end connector members (6, 6a) for coupling said at least one device to axially spaced inlet and outlet lengths (4a, 4b) of a pipe line, so that the internal fluid conduit extends through each said end connector member (6, 6a) coaxial with the pipe line and opens into an end face opposed to an end face of its adjoining treatment device, into which latter end face opens the internal fluid conduit of said device, each pair of opposed end faces having an interposed sealing ring (34) for sealing the fluid conduits from the exterior, said wedge surfaces (10, 24; 16, 31) being disposed on adjacent said end faces of the members and being arranged to hold said end faces together with the sealing ring engaged operatively between them when said fluid conduits are in registration.

3. An assembly according to claim 2 for coupling a plurality of air treatment devices in series with the pipeline, between the or each successive pair of devices there being provided an intermediate connector member (8) having a through-bore (18) opening into opposite end faces (16), at each end face there being provided wedge surfaces (16, 31) for co-operation with the wedge surfaces (10, 24) of respective devices (2), and a respective securing screw (40) is provided between each said pair of devices and the intermediate connector member.

4. An assembly according to any one of claims 1 to 3 wherein the included angle of the wedge surfaces (10, 24 and 16, 31) for each connection is less than 10° and is preferably not more than 5°.

5. An assembly according to any one of claims 1 to 4 wherein at least one of the members or devices (2, 8) is provided with wedge surfaces (10, 24 or 16, 31) at opposite end faces (10 or 16) for coupling to respective further ones of the members or devices, and respective securing screws (40) for each said coupling or engagement means (62) for said rotary members are oppositely offset laterally relative to the openings of the conduits (12 or 18) in said opposite end faces of said at least one of the members or devices.

6. An assembly according to any one of claims 1 to 5 wherein the securing screw is mounted on a rim element (42) of its member or device, said element projecting axially beyond the associated end face (10, 16) thereof to form a limiting abutment face for the coupled member or device when said conduits are in registration.

7. An assembly according to claim 2 or claim 3, or any one of claims 4 to 6 when dependent to claim 2 or claim 3, wherein the wedge surfaces (10, 24 and 16, 31) extend upwardly and the or each treatment device (2) is mountable from above on its associated connector members (6, 8) so as to be supported thereon through the wedge surfaces independently of the engagement of said rotary members (40).

8. An air treatment device for an assembly according to any one of the preceding claims, said device comprising captive securing screws (40) or screw engagement means (62) adjacent opposite end faces on which said wedge surfaces are provided, the axes of said screws or engagement means extending in the direction of taper of the associated wedge surfaces of the device.

9. A connector member for an assembly according to any one of claims 1 to 7, said connector member comprising a through-bore (18) opening into opposite end faces (16) on which said wedge surfaces are provided, and captive securing screws (40) or screw engagement means (62) adjacent said opposite end faces the axes of said screws or engagement means extending in the direction of taper of the associated wedge surfaces of the member.

10. A connector member according to claim 9 provided with means (72) adapted to provide a branch connection to the fluid conduit (18) through it.

**Patentansprüche**

1. Eine Fluidkupplungsanordnung, die wenigstens zwei Elemente (2, 6, 8) umfaßt, die dazu ausgebildet sind, zusammengekuppelt zu werden mit inneren Fluidleitungen, die in gegenüberliegenden Endflächen der jeweiligen Elemente münden, die in Kommunikation miteinander gesetzt werden sollen und Dichtungseinrichtungen (34) zwischen den genannten Endflächen, welche die Fluidleitungen gegen außen hin abdichten, mit jeweiligen Keilflächen (10, 24; 16, 31) auf den genannten beiden Elementen, welche die Elemente durch Relativbewegung in Querrichtung zu den genannten Fluidleitungen in wechselseitigen Eingriff bringen, die genannten Keilflächen sind verschiebbar in wechselseitigen Eingriff bringbar, um die genannten Endflächen zusammenzuziehen, mit den Dichtungseinrichtungen betriebsfähig zwischen ihnen in Eingriff stehend, wenn die genannten Leitungen in bezug aufeinander fluchten, dadurch gekennzeichnet, daß eine Befestigungsschraube (40), die unverlierbar auf einem Vorsprung festgehalten wird, der sich von einer Endfläche eines der beiden Elemente (2, 6, 8) aus erstreckt, in einer mit Gewinde versehenen Öffnung im anderen der beiden Elemente in Eingriff bringbar ist, wodurch eine Drehung in einer Richtung eine relative Verschiebung der Keilflächen (10, 24 und 16, 31) bewirkt, so daß die Öffnungen der Leitungen (12, 14, 18) in Ausrichtung bzw. Fluchtung miteinander gezogen werden und eine Drehung in der entgegengesetzten Richtung die Leitungen aus der Ausrichtung bzw. Fluchtung drückt, so daß die Eingriffskräfte auf den Keilflächen (10, 24 und 16, 31) wenigstens teilweise erleichtert bzw. aufgehoben werden.

2. Eine Fluidkupplungsanordnung nach Anspruch 1, worin die genannten Elemente wenigstens eine Gasbehandlungsvorrichtung (2a, 2b, 2c) und Endverbindungselemente (6, 6a) für die Kupplung der genannten wenigstens einen Vorrichtung an axial im Abstand angeordnete Einlaß- und Auslaßlängen bzw. -streckenstücke (4a, 4b) einer Rohrleitung umfassen, so daß sich die innere Fluidleitung durch jedes der genannten Endverbindungselemente (6, 6a) koaxial mit der Rohrleitung erstreckt und in eine Endfläche mündet, die einer Endfläche auf ihrer angrenzenden Behandlungsvorrichtung gegenüberliegt, in welch' letztere Endfläche die innere Fluidleitung der genannten Vorrichtung mündet, jedes Paar von gegenüberliegenden Endflächen einen dazwischengelagerten Dichtungsring (34) für die Abdichtung der Fluidleitungen nach außen aufweisen, die genannten Keilflächen (10, 24; 16, 31) auf angrenzenden genannten Endflächen der Elemente gelagert und so angeordnet sind, daß sie die genannten Endflächen zusammenhalten, mit dem Dichtungsring betriebsfähig zwischen ihnen in Eingriff stehend, wenn die genannten Fluidleitungen fluchten bzw. ausgerichtet sind.

3. Eine Anordnung nach Anspruch 2 zum Kuppeln einer Mehrzahl von Luftbehandlungsvorrichtungen in Reihe mit der Rohrleitung, wobei zwischen dem oder jedem aufeinanderfolgenden Paar von Vorrichtungen ein Zwischenverbindungselement (8) vorgesehen ist, welches eine durchgehende Bohrung (18) aufweist, die in gegenüberliegenden Endflächen (16) mündet, wobei an jeder Endfläche Keilflächen (16, 31) zum Zusammenwirken mit den Keilflächen (10, 24) von entsprechenden Vorrichtungen (2) vorgesehen sind, und eine entsprechende Befestigungsschraube (40), zwischen jedem der genannten Paare von Vorrichtungen und dem Zwischenverbindungselement vorgesehen ist.

4. Eine Anordnung nach irgendeinem der Ansprüche 1 bis 3, worin der eingeschlossene Winkel der Keilflächen (10, 24 und 16, 31) für jede Verbindung weniger als 10° und vorzugsweise nicht mehr als 5° beträgt.

5. Eine Anordnung nach irgendeinem der Ansprüche 1 bis 4, worin wenigstens eines der Elemente oder eine der Vorrichtungen (2, 8) mit Keilflächen (10, 24 oder 16, 31) an gegenüberliegenden Endflächen (10 oder 16) zum Kuppeln mit entsprechenden weiteren der Elemente oder Vorrichtungen versehen ist, und entsprechende Befestigungsschrauben (40) für jede der genannten Kupplungs- oder Eingriffseinrichtungen (62) für die genannten drehbaren Elemente entgegengesetzt seitlich in bezug auf die Öffnungen der Leitungen (12 oder 18) in den genannten gegenüberliegenden Endflächen des genannten wenigstens einen Elementes oder der genannten wenigstens einen Vorrichtung versetzt sind.

6. Eine Anordnung nach irgendeinem der Ansprüche 1 bis 5, worin die Befestigungsschraube auf einem Randelement (42) ihres Elementes oder ihrer Vorrichtung montiert ist, welches genannte Element axial über die zugeordnete Endfläche (10, 16) des- oder derselben hinausragt, um eine begrenzende Anlagefläche für das gekuppelte Element oder die gekuppelte Vorrichtung zu bilden, wenn die genannten Leitungen ausgerichtet sind bzw. fluchten.

7. Eine Anordnung nach Anspruch 2 oder Anspruch 3, oder irgendeinem der Ansprüche 4 bis 6, wenn sie auf Anspruch 2 oder Anspruch 3 rückbezogen sind, worin sich die Keilflächen (10, 24 und 16, 31) nach oben erstrecken und die oder jede der Behandlungsvorrichtung(en) (2) von oben auf ihre zugeordneten Verbindungselemente (6, 8) montierbar ist (sind), sodaß sie darauf durch die Keilflächen unabhängig vom Eingriff der genannten drehbaren Elemente (40) abgestützt ist (sind).

8. Eine Luftbehandlungsvorrichtung für eine Anordnung nach irgendeinem der vorhergehenden Ansprüche, welche genannte Vorrichtung unverlierbar festgehaltene Befestigungsschrauben (40) oder Schraubeneingriffseinrichtungen (62) angrenzend an gegenüberliegende Endflächen umfaßt, auf welchen die genannten Keilfächen vorgesehen sind, die Achsen der genannten Schrauben oder Eingriffseinrichtungen sich in die Richtung der Verjüngung der zugeordneten Keilflächen der Vorrichtung erstreckend.

9. Ein Verbindungselement für eine Anordnung nach irgendeinem der Ansprüche 1 bis 7, welches genannte Verbindungselement eine durchgehende Bohrung (18), die in gegenüberliegende Endflächen (16) mündet, auf welchen die genannten Keilflächen vorgesehen sind, und unverlierbar festgehaltene Befestigungsschrauben (40) oder Schraubeneingriffseinrichtungen (62) angrenzend an die genannten gegenüberliegenden Endflächen umfaßt, die Achsen der genannten Schrauben oder Eingriffseinrichtungen sich in die Richtung der Verjüngung der zugeordneten Keilflächen des Elementes erstreckend.

10. Ein Verbindungselement nach Anspruch 9, das mit einer Einrichtung (72) versehen ist, die dazu ausgebildet ist, eine Zweigverbindung zur Fluidleitung (18) durch es zu schaffen.

**Revendications**

1. Montage d'accouplement pour fluide comprenant au moins deux éléments (2, 6, 8) prévus pour être accouplés à des conduits à fluide internes débouchant dans des faces d'extrémité opposées des éléments respectifs, pour être mis en communication l'un avec l'autre, et des moyens d'étanchéité (34) prévus entre les faces d'extrémité précitées pour assurer l'étanchéité des conduits à fluide précités par rapport à l'extérieur, dessurfaces de coins (10, 24; 16, 31) prévues aux deux éléments précités assurant l'engagement entre eux des éléments par un mouvement relatif transversalement aux conduits à fluide précités, les surfaces de coins précitées pouvant être amenées en engagement l'une avec l'autre par glissement pour attirer l'une vers l'autre les faces précitées, avec les moyens d'étanchéité engagés entre elles pour le fonctionnement lorsque les conduits précités se trouvent en registre, caractérisé en ce qu'une vis de fixation (40), maintenue captive sur une saillie partant d'une face d'extrémité de l'un des deux éléments précités (2, 6, 8) peut être engagée dans une ouverture taraudée de l'autre des deux éléments précités, d'où la rotation dans l'un des sens provoque le glissement relatif des surfaces de coins (10, 24 et 16, 31), amenant ainsi les ouvertures des conduits (12, 14, 18) en alignement l'une avec l'autre, et la rotation dans le sens opposé pousse les conduits hors d'alignement, de façon à relâcher au moins en partie des efforts d'engagement agissant sur les surfaces de coins (10, 24 et 16, 31).

2. Montage d'accouplement pour fluide suivant la revendication 1, dans lequel les éléments précités comportent au moins un dispositif de traitement de gaz (2a, 2b, 2c) et des éléments de raccord d'extrémité (6, 6a) pour accoupler le dispositif précité, prévu au moins, à des longueurs d'entrée et de sortie espacées axialement (4a, 4b) d'une canalisation, de telle façon que le conduit à fluide, interne passe par chacun des éléments de raccord d'extrémité précités (6, 6a) coaxialement à la canalisation et s'ouvre dans une face d'extrémité opposée à une face d'extrémité de son dispositif de traitement voisin, seconde face d'extrémité dans laquelle s'ouvre le conduit à fluide interne du dispositif précité, chaque paire de faces d'extrémité opposées étant munie d'un anneau d'étanchéité (34) intercalé entre les faces pour assurer l'étanchéité des conduits à fluide par rapport à l'extérieur, les surfaces de coins précitées (10, 24; 16, 31) étant prévues sur les faces d'extrémité précitées voisines des éléments et étant prévues pour maintenir les faces d'extrémité précitées, avec l'anneau d'étanchéité placé pour le fonctionnement entre elles, lorsque les conduits à fluide précités se trouvent en registre.

3. Montage suivant la revendication 2 pour accoupler une série de dispositifs de traitement d'air en série à la canalisation, un élément de raccord intermédiaire (8) qui présente un passage de part en part (18) s'ouvrant dans les faces d'extrémité opposées (16) étant prévu entre les deux dispositifs ou entre les dispositifs de chacune des paires successives de dispositifs, des surfaces de coins (16, 31) destinées à coopérer avec des surfaces de coins (10, 24) des dispositifs respectifs (2) étant prévues à chaque face d'extrémité, et une vis de fixation respective (40) étant prévue entre les deux dispositifs de chaque paire précitée et l'élément de raccord intermédiaire.

4. Montage suivant l'une quelconque des revendications 1 à 3, dans lequel l'angle inclus des surfaces de coins (10, 24 et 16, 31) pour chaque raccord est de moins de 10° et n'est de préférence pas supérieur à 5°.

5. Montage suivant l'une quelconque des revendications 1 à, dans lequel au moins l'un des éléments ou dispositifs (2, 8) est muni de surfaces de coins (10, 24 ou 16, 31) aux faces d'extrémité opposées (10 ou 16) pour l'accouplement à d'autres des éléments ou dispositifs, et dans lequel des vis de fixation respectives (40) pour chaque moyen d'accouplement ou d'engagement précité (62) pour les éléments tournants précités sont décalés en opposition latéralement par rapport aux ouvertures des conduits (12 ou 18) dans les faces d'extrémité opposées précitées de l'élément ou dispositif prévu au moins.

6. Montage suivant l'une quelconque des revendications 1 à 5, dans lequel la vis de fixation est montée sur un élément de rebord (42) de son élément ou dispositif, l'élément de rebord précité s'avançant dans le sens axial au-delà de la face d'extrémité correspondante (10, 16) pour former une face de butée de limite pour l'élément ou le dispositif accouplé, lorsque les conduits précités se trouvent en registre.

7. Montage suivant la revendication 2 ou la revendication 3 ou l'une quelconque des revendications 4 à 6, pour autant que celles-ci dépendent de la revendication 2 ou de la revendication 3, dans lequel les surfaces de coins (10, 24 et 16, 31) s'étendent vers le haut et dans lequel le dispositif de traitement ou chaque dispositif de traitement (2) peut être monté du dessus sur les éléments de raccord correspondants (6, 8) de façon à être supportés par ceux-ci par l'intermédiaire des surfaces de coins, indépendamment de l'engagement des éléments tournants précités (40).

8. Dispositif de traitement d'air pour un montage suivant l'une quelconque des revendications précédentes, le dispositif comprenant des vis de fixation captives (40) ou des moyens d'engagement de vis (62) au voisinage des faces d'extrémité opposées sur lesquelles les surfaces de coins sont prévues, les axes des vis ou des moyens d'engagement précités s'étendant dans le sens de l'inclinaison des surfaces de coins correspondantes du dispositif.

9. Elément de raccord pour un montage suivant l'une quelconque des revendications 1 à 7, l'élément de raccord présentant un passage de part en part (18) s'ouvrant dans des faces d'extrémité opposées (16) sur lesquelles les surfaces de coins sont prévues, et des vis de fixation captives (40) ou des moyens d'engagement de vis (62) au voisinage des faces d'extrémité opposées précitées, les axes des vis ou des moyens d'engagement précités s'étendant dans le sens de l'inclinaison des surfaces de coins correspondantes de l'élément.

10. Elément de raccord suivant la revendication 9, muni de moyens (72) prévus pour former un raccord de branchement au conduit à fluide (18) passant par lui.

FIG.1

FIG.2

0 047 351

FIG.3

FIG.4

FIG.5

3